## Europäisches Patentamt
## European Patent Office
## Office européen des brevets

(19)

(11) Veröffentlichungsnummer : **0 164 153**
**B1**

(12)
# EUROPÄISCHE PATENTSCHRIFT

(45) Veröffentlichungstag der Patentschrift :
30.11.88

(51) Int. Cl.⁴ : **B 26 B 19/38**

(21) Anmeldenummer : 85200690.7

(22) Anmeldetag : 02.05.85

(54) Vibrationstrockenrasierapparat, der mittels eines zweipoligen Einphasensynchronmotors angetrieben wird.

(30) Priorität : 14.05.84 DE 3417806

(43) Veröffentlichungstag der Anmeldung :
11.12.85 Patentblatt 85/50

(45) Bekanntmachung des Hinweises auf die Patenterteilung : 30.11.88 Patentblatt 88/48

(84) Benannte Vertragsstaaten :
**AT DE FR GB**

(56) Entgegenhaltungen :
**EP-A- 0 045 107**
**DE-A- 1 553 748**
**FR-A- 2 271 907**

(73) Patentinhaber : **Philips Patentverwaltung GmbH**
**Wendenstrasse 35 Postfach 10 51 49**
**D-2000 Hamburg 1 (DE)**
**DE**
**N.V. Philips' Gloeilampenfabrieken**
**Groenewoudseweg 1**
**NL-5621 BA Eindhoven (NL)**
**FR GB AT**

(72) Erfinder : **Bertram, Leo**
**Am Sender 10**
**D-5190 Stolberg (DE)**
Erfinder : **Schemmann, Hugo, Dr.**
**Zwartebergweg 6**
**NL-6371 XD Schaesberg (NL)**
Erfinder : **Bukoschek, Romuald Leander**
**Dr.-Palla-Gasse 28**
**A-9020 Klagenfurt (AT)**

(74) Vertreter : **Kupfermann, Fritz-Joachim, Dipl.-Ing. et al**
**Philips Patentverwaltung GmbH Wendenstrasse 35**
**Postfach 10 51 49**
**D-2000 Hamburg 1 (DE)**

EP 0 164 153 B1

## Beschreibung

Die Erfindung bezieht sich auf einen Vibrationstrockenrasierapparat, der mittels eines zweipoligen Einphasensynchronmotors angetrieben wird und mit einem Scherkopf versehen ist, der auf das Apparategehäuse aufgesetzt ist und unter einem feststehenden Messerteil ein Vibrationsmesserteil aufweist, das mittels eines durch eine Trennwand hindurchgreifenden Schwinghebels angetrieben wird, wobei die Durchtrittsöffnung mittels einer elastischen Dichtmanschette abgedichtet ist, die rings um den Schwinghebel einen U-förmig oder rinnenförmig ausgebildeten, einseitig offenen Balg aufweist.

Aus der EP-A-45 107 ist ein Trockenrasierapparat bekannt, bei dem zum Antreiben des hin und her beweglichen Schneidmessers eines Scherkopfes ein zweipoliger Einphasensynchronmotor eingesetzt wird. Zur Umwandlung der Drehbewegung an der Motorwelle in die hin- und hergehende Bewegung des Schneidmessers wird ein Nocken-Rollenmechanismus eingesetzt. Das Schneidmesser wird mit Hilfe von Andruckfedern gegen die sich über das Schneidmesser wölbende Scherfolie gedrückt. Die Andruckfedern stützen sich mit dem einen Ende an gerätefesten Fußpunkten und mit den anderen Enden an Auflagerstellen des Schneidmessers ab.

Das Innere des Apparategehäuses ist vom aufsetzbaren Scherkopf durch eine Trennwand getrennt. In der Trennwand befindet sich eine Durchtrittsöffnung, durch die ein Schwinghebel hindurchgreift, der an dem Schneidmesser angreift. Das Innere des Gehäuses ist gegen das Durchfallen von abgeschnitteten Haarteilen und Hautschuppen sowie anderen Schmutzpartikeln abgeschirmt mittels einer nicht näher dargestellten oder erläuterten Dichtmanschette, die den Schwinghebel eng umfaßt und sich rings um den Rand der Durchtrittsöffnung außen abstützt. Die Dichtmanschette ist elastisch ausgebildet.

Es hat sich nun gezeigt, daß bei den herkömmlichen bekannten Dichtmanschetten Kraftkomponenten entstehen können, die das Schneidmesser in der Nähe der beiden Endstellungen des Schneidmessers in diesen Endstellungen festzuhalten suchen.

Aus der EP-A-45 107 ist es darüber hinaus bekannt, daß das Schneidmesser gerade dann seine Endstellungen mit maximaler Auslenkung einnehmen soll, wenn der Rotor gerade im Parallelstand ist, in dem das Motor- und Rotorfeld parallel zueinander verlaufen. Das auf den Motor wirkende Reibungsmoment wird in diesen Stellungen des Schneidmessers im allgemeinen minimal, und das Klebemoment ist in der Lage, den Rotor aus der Position zu drehen, in der das Strommoment gleich Null ist. Dieses selbsttätige Herausdrehen aus der Endstellung kann, da die Elastizität der Dichtmanschette nicht unendlich klein gemacht werden kann, durch die Dichtmanschette erschwert werden.

Es ist Aufgabe der Erfindung, ein Gerät der eingangs erwähnten Art dadurch zu verbessern, daß durch Abänderung der Dichtmanschette die auf das Schneidmesser wirkenden Federkräfte den Anlauf aus der Endstellung, in der Rotor und Statorfeld parallel verlaufen, positiv zu beeinflussen und damit die Anlaufspannung bei gegebener Motordimensionierung zu senken.

Die gestellte Aufgabe ist erfindungsgemäß dadurch gelöst, daß :

- das Vibrationsmesserteil infolge eines asymmetrischen Aufbaues der Dichtmanschette in der Endstellung, in der gerade im Motor die Magnetfelder von Rotor und Stator parallel zueinander verlaufen, frei von Belastungen durch die Dichtmanschette ist,
- der den Schwinghebel umfassende Klemmrand der Manschette in Richtung auf die bezeichnete Endstellung versetzt ist gegenüber dem am Rand der Durchtrittsöffnung anliegenden Klemmrand,
- die Profilbreite des Balges entsprechend dieser Versetzung in Richtung der Versetzung verschmälert und entgegen der Richtung der Versetzung verbreitert ist.

Damit ist erreicht, daß das Schermesser in der Endstellung, in der Rotor- und Statorfeld parallel verlaufen, von der Dichtmanschette nicht beeinflußt wird. Das Klebemoment kann deshalb besser zur Geltung kommen und das Schneidmessser aus der Endstellung herausdrücken.

Durch die Verschmälerung des Balges auf der Apparateseite in Richtung der bezeichneten Endstellung und die Verbreiterung des Balges auf der entgegengesetzten Seite werden dann die in Richtung auf die bezeichnete Endstellung wirkenden Kraftquerkomponenten aufgehoben, so daß das wirkende Klebemoment voll zur Geltung kommen kann.

Durch die Gestaltung der Manschette und deren Material können die Kräfte auf den Schwinghebel klein gemacht werden. Dies dient der Erhöhung der Elastizität des Balges der Dichtmanschette. Insgesamt sollen die auf den Schwinghebel wirkenden Kräfte der Dichtmanschette auf ein Minimum verringert sein.

Die Erfindung wird anhand des in der Zeichnung dargestellten Ausführungsbeispieles näher erläutert. Es zeigen :

Fig. 1 einen Trockenrasierapparat, der mittels eines Einphasensynchronmotors angetrieben wird, teilweise geöffnet und teilweise im Schnitt, wobei die Dichtmanschette in der Trennwand zwischen Gerätegehäuse und Scherkopf und einem durch die Trennwand hindurchgreifenden Schwinghebel herausgestellt ist,

Fig. 2a bis 2c die Dichtmanschette in der Trennwand des Gerätes in zwei verschiedenen Schnitten und in Draufsicht.

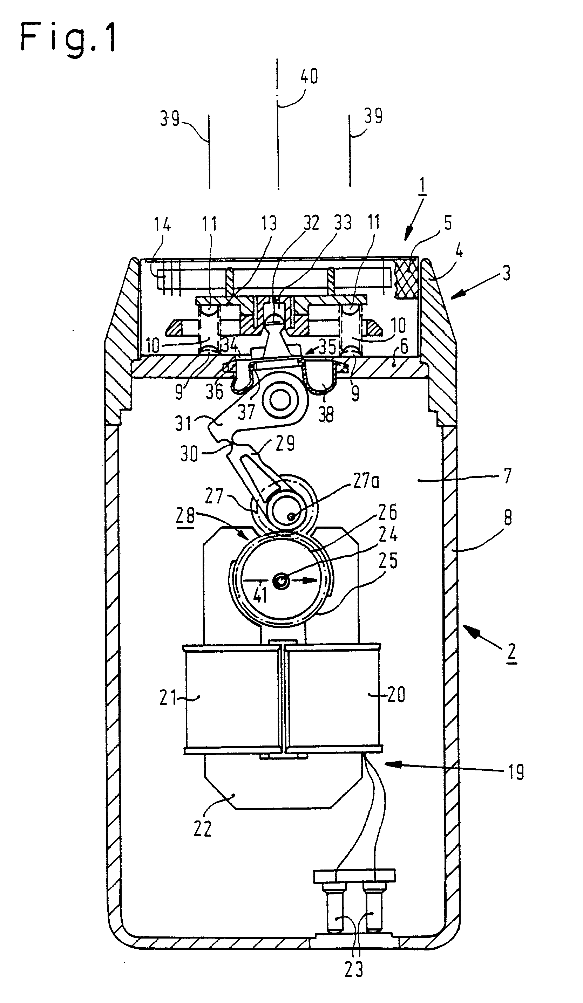

Bei einem in Fig. 1 dargestellten Trockenrasierapparat 1 ist auf das Gehäuse 2 ein Scherkopf 3 aufgesetzt. Der Scherkopf 3 weist einen Scherkopfrahmen 4 auf, in den auf nicht näher dargestellte Weise eine gewölbte Siebscherfolie 5 eingehängt ist. Dazu können die Längsränder der Siebscherfolie 5 beispielsweise in Haken des Scherkopfrahmens 4 eingehängt sein. Das Gehäuse 2 besteht aus zwei Gehäusehälften, von welchen eine Gehäusehälfte 8 von ihrer Innenseite her sichtbar ist.

Das Gehäuse 2 ist an seiner Scherkopfseite mit einer Trennwand 6 versehen, die den Innenraum 7 des Gehäuses vom Scherkopf trennt.

An der Trennwand 6 sind scherkopfseitig als Auflager dienende Fußpunkte 9 für Andruckfedern 10 vorgesehen. Die oberen Enden der Andruckfedern 10 stützen sich an Auflagern 11 eines Schneidmessers 13 ab. Das Schneidmesser 13 trägt Messerlamellen 14, die bogenförmig von unten in die bogenförmig eingespannte Siebscherfolie hineindrücken.

Das Schneidmesser 13 ist vibrierend hin- und hergehend antreibbar. Zum Antreiben ist ein zweipoliger Einphasensynchronmotor 19 vorgesehen, der einen mit Erregerwicklungen 20, 21 versehenen Stator 22 aufweist. Die Erregerwicklungen 20 und 21 sind über Netzanschlußstifte 23 erregbar.

Auf der Motorwelle 24, die einen dauermagnetischen Rotor 25 trägt, ist ein Zahnrad 26 befestigt, das zusammen mit einem Zahnrad 27 kämmt und ein Übersetzungsgetriebe 28 bildet. Auf dem Zahnrad 27 befindet sich ein exzentrischer Nocken 27a, der an einer Pleuelstange 29 angreift. Über ein Filmscharnier 30 ist die Pleuelstange 29 mit einem Schwinghebel 31 verbunden, der mit einem Mitnehmerkopf 32 in eine Ausnehmung 33 des Schneidmessers 13 eingreift.

Der Schwinghebel 31 greift dabei durch eine Durchtrittsöffnung 34 in der Trennwand 6 hindurch. Der Freiraum zwischen dem Schwinghebel 31 und dem Rand der Durchtrittsöffnung 34 wird abgedichtet mittels einer Dichtmanschette 35. Diese Dichtmanschette sitzt mit einem äußeren Klemmrand 36 in einer Nut der Trennwand mit einem inneren Klemmrand 37 auf dem Schwinghebel 31. Zwischen den Klemmrändern befindet sich ein rings um den Schwinghebel 31 herum laufender U- oder rinnenförmiger Balg 38.

Bei der Darstellung in Fig. 1 nimmt das Schneidmesser 13 eine linke Endstellung ein. In dieser linken Endstellung verlaufen die Mittellinien 39 der Andruckfedern parallel zur Mittellinie 40 des Apparates. Die Querkomponente der Federkraft der Andruckfedern 10 in Richtung auf die linke Endstellung ist damit Null.

Der Verlauf des Rotorfeldes ist bei der linken Endstellung laut Fig. 1 durch einen Pfeil 41 angegeben. Diese Feldrichtung ist bei der in Fig. 1 dargestellten Endstellung des Schneidmessers 13 identisch und parallel mit der Feldrichtung des Stators.

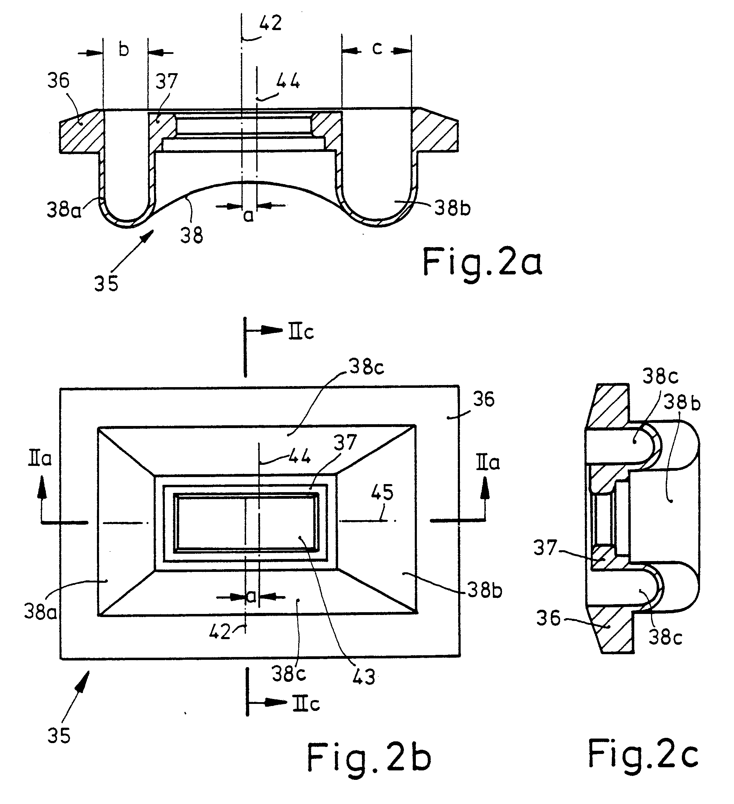

Fig. 2 zeigt in vergrößerter Darstellung die Dichtmanschette 35 als Einzelteil und damit von jeglichen auf sie wirkenden Kräften entlastet. Die Fig. 2a und 2b zeigen dabei, daß die Mittellinie 42 der den Schwinghebel umgreifenden Öffnung 43 der Dichtmanschette 35 nach links versetzt ist, und zwar in Richtung auf die bezeichnete linke Endstellung. Das Versetzungsmaß gegenüber der theoretischen Mittellinie 44 der Dichtmanschette ist mit a angegeben. Innerhalb des äußeren Klemmrandes 36 ist damit der innere Klemmrand 37 um den Betrag a nach links versetzt. Aufgrund dieser Versetzung ist der rinnenförmige oder U-förmige Balg 38 rings um den Klemmrand 37 auf der linken Balgseite 38a verschmälert auf den Betrag b und auf der rechten Balgseite 38b verbreitert auf den Betrag c. Darüber hinaus ist aus Fig. 2c zu entnehmen, daß der Querschnitt des rinnenförmigen Balgteiles 38c beiderseits der Längsmittellinie 45 in Vibrationsrichtung gleich ist.

Auf diese Weise ergibt sich eine Dichtmanschette 35, die in Vibrationsrichtung längs der Linie 45 auf der linken und der rechten Seite unterschiedliche Steifigkeiten aufweist. Diese unterschiedlichen Steifigkeiten sollen im Rahmen der Konstruktion so gewählt werden, daß sie möglichst klein sind und allgemein die Kräfte auf den Schwinghebel 31 auf ein Minimum reduzieren.

## Patentanspruch

Vibrationstrockenrasierapparat, der mittels eines zweipoligen Einphasensynchronmotors (19) angetrieben wird und mit einem Scherkopf (3) versehen ist, der auf das Apparategehäuse (2) aufgesetzt ist und unter einem feststehenden Messerteil (5) ein Vibrationsmesserteil (13) aufweist, das mittels eines durch eine Trennwand (6) hindurchgreifenden Schwinghebels (31) angetrieben wird, wobei die Durchtrittsöffnung (34) mittels einer elastischen Dichtmanschette (35) abgedichtet ist, die rings um den Schwinghebel (31) einen U-förmig oder rinnenförmig ausgebildeten, einseitig offenen Balg (38) aufweist, dadurch gekennzeichnet, daß

- das Vibrationsmesserteil (13) infolge eines asymmetrischen Aufbaues der Dichtmanschette (35) in der Endstellung, in der gerade im Motor (19) die Magnetfelder (41) von Rotor (25) und Stator (22) parallel zueinander verlaufen, frei von Belastungen durch die Dichtmanschette (35) ist,
- der den Schwinghebel (31) umfassende Klemmrand (37) der Manschette (35) in Richtung auf die bezeichnete Endstellung versetzt ist gegenüber dem am Rand der Durchtrittsöffnung (34) anliegenden Klemmrand (36),
- die Profilbreite des Balges (38) entsprechend dieser Versetzung in Richtung der Versetzung verschmälert (b) und entgegen der Richtung der Versetzung verbreitert (c) ist.

## Claim

A vibratory dry-shaving apparatus which is driven by means of a two-pole single-phase synchronous motor (19) and which comprises a shaving head (3) arranged on the apparatus housing (2) and comprising a vibratory cutter (13) underneath a stationary cutter (5), which vibratory cutter is driven by means of a swing lever (31) which passes through a partition (6), the passage (34) being sealed by means of an elastic seal (35) which comprises a U-shaped or channel-shaped bellows (38) which is open at one side and which surrounds the swing lever (31), characterized in that

- owing to an asymmetrical construction of the seal (35) the seal (35) exerts no loads on the vibratory cutter (13) in the end position in which in the motor (19) the magnet fields (41) of the rotor (25) and the stator (22) are directed exactly parallel to each other,

- the clamping rim (37) of the seal (35), which rim surrounds the swing lever (3) is offset towards said end position with respect to the clamping rim (36) situated at the edge of the passage (34),

- in conformity with said offset the profile width of the bellows (38) is narrowed (b) in the direction of said offset and is widened (c) in a direction opposite to said offset.

**Revendication**

Rasoir à sec à vibration entraîné par un moteur synchrone monophasé bipolaire (19) et muni d'une tête de rasage (3) placée sur le boîtier (2) du rasoir et présentant une partie de couteau vibrante (13) disposée au-dessous d'une partie de couteau immobile (5) et entraînée par un levier oscillant (31) traversant une cloison (6), l'ouverture de traversée (34) étant fermée par une manchette d'étanchéité élastique (35) présentant autour du levier oscillant (31) un soufflet en U ou en goulotte (38) ouvert d'un côté, caractérisé en ce que

par une construction asymétrique de la manchette d'étanchéité (35), dans la position extrême où, dans le moteur (19), les champs magnétiques (41) du rotor (25) et du stator (22) s'étendent parallèlement l'un à l'autre, la partie de couteau vibrante (13) n'est pas soumise à des charges exercées par la manchette d'étanchéité (35),

le bord de serrage (37) de la manchette (35), enserrant le levier oscillant (31), est décalé en direction de ladite position extrême par rapport au bord de serrage (36) appliqué contre le bord de l'ouverture de traversée (34),

la largeur de profil du soufflet (38), proportionnellement à ce décalage, est diminuée (b) en direction du décalage et est augmentée (c) à l'opposé de la direction du décalage.

# Fig.1

Fig.2a

Fig.2b

Fig.2c